# EUROPEAN PATENT SPECIFICATION

(11) **EP 4 206 207 B1**
(45) Date of publication and mention of the grant of the patent: **23.04.2025**
(21) Application number: 21218374.3
(22) Date of filing: 30.12.2021
(51) Int. Cl.: C07F 5/02

(54) **A METHOD FOR HYDROBORATION OF ISOBUTYLENE CATALYZED WITH IRIDIUM N-HETEROCYCLIC CARBENE**
VERFAHREN ZUR HYDROBORIERUNG VON ISOBUTYLEN, KATALYSIERT MIT IRIDIUM-N-HETEROCYCLISCHEM CARBEN
PROCÉDÉ D'HYDROBORATION D'ISOBUTYLÈNE CATALYSÉE AVEC UN CARBÈNE N-HÉTÉROCYCLIQUE À L'IRIDIUM

(43) Date of publication of application: 05.07.2023
(73) Proprietor: Socar Turkey Arastirma Gelistirme Ve Inovasyon A.S., Istanbul (TR); Izmir Yuksek Teknoloji Enstitusu, 35430 Urla/Izmir (TR)
(72) Inventor: EZDESIR, Ayhan, Izmir (TR); KARACA, Sila, Izmir (TR); ARTOK, Levent, Urla 35430 Izmir (TR); ARAPOGLU, Mehmet Anil, Urla 35430 Izmir (TR); GODE, Nedim Bugra, Urla 35430 Izmir (TR)
(74) Representative: Sevinç, Cenk

(56) References cited:
- ZHOU XIN-FENG ET AL: "Borylation of primary and secondary alkyl bromides catalyzed by Cu 2 O nanoparticles", RSC ADVANCES, vol. 5, no. 58, 1 January 2015 (2015-01-01), GB, pages 46672 - 46676, XP055927322, ISSN: 2046-2069, DOI: 10.1039/C5RA06631J
- WANG XIAO-XU ET AL: "Vicinal Diboration of Alkyl Bromides via Tandem Catalysis", ORGANIC LETTERS, vol. 21, no. 11, 23 May 2019 (2019-05-23), US, pages 4298 - 4302, XP055927323, ISSN: 1523-7060, Retrieved from the Internet <URL:https://pubs.acs.org/doi/pdf/10.1021/acs.orglett.9b01481> DOI: 10.1021/acs.orglett.9b01481

## Description

### Technical Field of the Invention

The present invention relates to a method for iridium-catalyzed hydroboration of isobutylene with pinacolborane (HBpin). Hydroboration reaction, in which iridium N-heterocyclic carbene (NHC) complexes [IrCl(COD)(NHC)] are used as catalysts can be performed at low iridium concentration (0.01 mole% - 0.10 mole% compared to the molar amount of HBpin). The iridium N-heterocyclic carbene (NHC) catalyst is extremely stable, and can be stored even in an open environment. In addition, there is no need for any base or other chemicals to be present in the reaction environment while said hydroboration reaction occurs. Isobutylboronic acid pinacol ester, which is an organoboron compound is obtained as a result of the method of iridium-catalyzed hydroboration of isobutylene with HBpin.

### State of the Art

Organoboranes obtained by hydroboration are important types of organoboron compounds. Organoboron compounds have an importance and wide application area in organic synthesis and particularly, in the synthesis of active pharmaceutical ingredient since they have superiorities such as their stability against water and air, that they are able to react with functional groups, that the reactions thereof have the property of high stereoselectivity, and that the side -product thereof is environmentally friendly boric acid. It is inevitable to indicate that hydroboration reaction used in the synthesis of organoboron compounds is a quite important synthesis method, considering the importance of organoboron compounds.

In the state of the art, alkylboron compounds are obtained as a result of metal-catalyzed anti-Markovnikov hydroboration of alkenes. Rh and Ir compounds are used as metal catalysts during anti-Markovnikov hydroboration. However, metal catalyst structures containing Rh and Ir compounds cause high costs. In addition, hydroboration reactions of alkenes result in substantial costs when considering in terms of the expensiveness of the metal catalyst used thereof, as well as the ligands that control the metal activity, solvents, atom economy of the reaction, and other chemical additives that should be present in the reaction medium.

Metal catalysts containing Rh and Ir at 1-5 mole% ratios (compared to the molar amount of reactant) are used in hydroboration reactions in the current applications in the literature. However, the use of catalysts containing Rh and Ir at 1-5 mole% ratios (compared to the molar amount of reactant) is not sufficient in terms of industry, although the use of these amounts in hydroboration reactions is valid in the studies carried out in the literature.

In the state of the art, expensive and strong bases must be used in hydroboration reactions where compounds containing Ni, Co, Cu, and Fe metals are used as metal catalysts, and also factors that negatively affect the reaction arise such as low activities and low selectivity, which are found in sterically bulky compounds. Therefore, the desired products are formed at low yields, and it is observed that significant amounts of isomeric by-products are formed.

Bis(pinacolato)diboron (B₂pin₂) is used as boron reagent in hydroboration reactions in the state of the art. In hydroboration reactions where B₂pin₂ is used, one of the boron of the B₂pin₂ reagent reacts while the other is a waste. The use of B₂pin₂ as a boron reagent in hydroboration reactions reduces the maximum yield that can be obtained from a reagent when considering in terms of atom economy.

In the state of the art, ligands (phosphine ligands etc.) used in hydroboration reactions reduce the stability of the catalyst and cause the catalyst to deactivate by decomposing to metal black, and therefore, reduce the life cycle of the catalyst.

In hydroboration reactions in the current applications in the literature, a major health and waste problem arises as a result of the use of dichloromethane (CH₂Cl₂) as a solvent, which is in the high risk group in terms of environment and health. Additionally, in the state of the art, ligands (phosphine ligands, etc.) that are used in addition to the metal catalyst in hydroboration reactions and that control metal activity thereof can be dangerous inasmuch as adversely affect human and animal health.

Metal catalyst structures containing Rh and Ir compounds used as catalysts in hydroboration reactions in the state of the art cause high costs. In addition, hydroboration reactions of alkenes result in substantial costs when considering in terms of the expensiveness of the metal catalyst used thereof, as well as the ligands that control the metal activity, solvents, atom economy of the reaction, and other chemical additives that should be present in the reaction medium. Thus, although metal catalysts containing Rh and Ir are used at a low rate (1-5 mole% ratios) compared to the molar amount of the reactant in the hydroboration reactions in the current applications in the literature, these amounts are small to be not sufficient in industrial terms. Apart from metal catalysts containing Rh and Ir, which cause high costs, expensive and strong bases must be used in hydroboration reactions where compounds containing Ni, Co, Cu and Fe metals are used as metal catalysts, and also factors that negatively affect the reaction arise such as low activities and low selectivity, which are found in sterically bulky compounds. In the state of the art, one of the borons of the B₂pin₂ reagent reacts, which is used as a boron reagent in boron hydroboration reactions while the other is a waste. The use of B₂pin₂ as a boron reagent in hydroboration reactions reduces the maximum yield that can be obtained from a reagent when considering in terms of atom economy. In the state of the art, ligands (phosphine ligands, etc.) that are used in addition to the metal catalyst in hydroboration reactions and that control metal activity thereof can be dangerous inasmuch as adversely affect human and animal health. In addition, another negative effect of the ligands used in the state of the art is that they reduce the stability of the catalyst and cause the catalyst to deactivate by decomposing to metal black, and therefore, reduce the life cycle of the catalyst. Furthermore, in hydroboration reactions in the current applications in the literature, a major health and waste problem arises as a result of the use of dichloromethane as a solvent, which is in the high risk group in terms of environment and health.

In the prior art, Xin-Feng Zhou et al. have studied about borylation of primary and secondary alkyl bromides catalyzed by Cu₂O nanoparticles. Their catalytic system features mild reaction conditions, high yield (nearly 100%) and the absence of ligands which otherwise are essential in homogenous catalysis. They have developed an efficient route for the borylation of primary and secondary alkyl bromides catalyzed by Cu₂O nanoparticles. Their approach gives high yield of borylation of primary and secondary alkyls bromides with wide range of functional groups, using either B₂pin₂ or B₂(neop)₂ as the boron donor. It also demonstrates outstanding recyclability and hence has enormous potential in largescale production [1].

In another prior art, Xiao-Xu Wang et al. has been studied about vicinal diboration of alkyl bromides via tandem catalysis. The reported reaction exhibits a broad substrate scope, good functional group compatibility, and regioselectivity. Moreover, it shows good practicality due to the easy accessibility of alkyl bromides in combination with diverse transformations of diboronates. Mechanism study indicates that terminal alkenes are generated selectively through nickel-catalyzed dehydrohalogenation of alkyl bromides followed by base/MeOH promoted diboration process to provide 1,2-diboration products [2].

It is necessitated to develop a method for hydroboration, in which the costs of catalyst and other chemical reactants used are minimized without reducing the yield obtained as a result of the hydroboration reaction, which does not contain a chemical that can harm the environment and human health and is substantially dangerous, which extends the life cycle of the catalyst used in the reaction by ensuring the stability thereof, in which the reactant efficiency is increased and the need for the use of strong and costly bases is eliminated, due to the facts such as the limitations and inadequacies of the available solutions in the state of the art; that metal catalyst structures containing Rh and Ir compounds, which are used as catalysts in hydroboration reactions in the literature, cause high costs; that the ligands, solvents and other chemical additives that are used other than the metal catalyst, which control the metal activity thereof, and other chemical additives that must be present in the reaction environment also cause high costs during the hydroboration reactions of alkenes; the necessity of using expensive and strong bases in hydroboration reactions where compounds containing Ni, Co, Cu, and Fe metals are used as metal catalysts, apart from metal catalysts containing Rh and Ir, which cause high costs; the emergence of factors that adversely affect the reaction such as low activities and low selectivity found in sterically bulky compounds, as a result of the use of compounds containing Ni, Co, Cu, and Fe metals as metal catalysts in hydroboration reactions; that in hydroboration reactions in the state of the art, atom economy decreases as a result of the reaction of one of the borons of the B₂pin₂ reagent, which is used as a boron reagent, while the other one is a waste; that the ligands (phosphine ligands, etc.) that control the metal activity used in hydroboration reactions in the state of the art are classified as hazardous waste and said ligands reduce the stability of the metal catalyst used, causing the metal catalyst to be easily deactivated, therefore reducing the life cycle of the metal catalyst; and also in hydroboration reactions in current applications, the use of dichloromethane as a solvent, which is in the high risk group in terms of environment and health.

### Brief Description and Objects of the Invention

The present invention discloses a method for iridium-catalyzed hydroboration of isobutylene with pinacolborane (HBpin). Hydroboration reaction, in which iridium N-heterocyclic carbene (NHC) complexes [IrCl(COD)(NHC)] are used as catalysts can be performed at low iridium concentration (0.01 mole% - 0.10 mole% compared to the molar amount of HBpin). The iridium NHC catalyst is extremely stable, and can be stored even in an open environment. In addition, there is no need for any base or other chemicals to be present in the reaction environment while said hydroboration reaction occurs. Isobutylboronic acid pinacol ester, which is an organoboron compound is obtained as a result of the method of iridium-catalyzed hydroboration of isobutylene with HBpin.

An object of the present invention is to minimize the cost of obtaining alkylboron compounds as a result of high-cost metal-catalyzed anti-Markovnikov hydroboration. Minimizing the cost in said hydroboration reactions is ensured by means of using iridium NHC catalyst at low iridium concentration (0.01 mole%-0.10 mole% compared to the molar amount of HBpin) in the method of hydroboration of isobutylene with HBpin, which is the subject of the present invention. In addition, the costs of ligands controlling metal activity thereof, atom economy of the reaction, and other chemical additives required in the reaction environment are also minimized by means of the method of iridium-catalyzed hydroboration of isobutylene with pinacolborane.In the present invention, particularly using low amount of ligand and the fact that no additive chemicals are required in the reaction environment are the factors that reduce the costs. Other metal-catalyzed methods using B₂pin₂ as a boron source results in the waste of one pinacolborane molecule for each boron transfer to the alkene molecule. This is not possible in the method of the present invention in which the HBpin reagent is used.

Another object of the present invention is to perform an efficient synthesis in terms of the industry despite the low rate of iridium NHC catalyst used. Despite the low rate of iridium NHC catalyst used, performing the synthesis of an industrially sufficient organoboron compound (isobutylboronic acid pinacol ester) is provided by means of the method of hydroboration of isobutylene with pinacolborane.

The necessity of using expensive and strong bases in hydroboration reactions is eliminated by means of the present invention. The necessity of using expensive and strong bases in hydroboration reactions is eliminated by means of the use of the iridium-catalyzed hydroboration method of isobutylene with HBpin, which is the subject of the invention, in the synthesis of isobutylboronic acid pinacol ester, which is an organoboron compound.

The atom economy is maximized by means of using iridium-catalyzed hydroboration method of isobutylene with HBpin, which is the subject of the invention, in the synthesis of isobutylboronic acid pinacol ester, which is an organoboron compound. No boron waste is formed while using HBpin as boron reagent in hydroboration reactions in the method that is the subject of the invention. Thus, the maximum yield that can be obtained from a reagent is achieved by means of the aforementioned method.

Another object of the present invention is to provide a hydroboration method that does not pose any threat to the environment, human and animal health in hydroboration reactions. A method that does not pose a threat to the environment, and also human and animal health is possible by means of using N-heterocyclic carbene (NHC) ligand as ligand, and using tetrahydrofuran (THF) as the solvent in said method of iridium-catalyzed hydroboration of isobutylene with HBpin.

In the present invention, the catalysts used in hydroboration reactions are prevented from being deactivated by decomposing to metal black, and the life cycle of said catalyst is extended by increasing the stability of the ligand. In the present invention, in the method of iridium-catalyzed hydroboration of isobutylene with pinacolborane used in the synthesis of isobutylboronic acid pinacol ester, which is an organoboron compound, the stability of Iridium NHC catalyst, which is the active catalyst is increased, and said catalyst is prevented from being deactivated by decomposing to metal black by means of using NHC ligand. In other words, the life cycle of said catalyst is increased.

### Detailed Description of the Invention

The present invention relates to a method for iridium-catalyzed hydroboration of isobutylene with pinacolborane (HBpin). Hydroboration reaction, in which iridium N-heterocyclic carbene (NHC) complexes [IrCl(COD)(NHC)] are used as catalysts can be performed at low iridium concentration (0.01 mole% - 0.10 mole% compared to the molar amount of HBpin). The iridium N-heterocyclic carbene (NHC) catalyst is extremely stable, and can be stored even in an open environment. In addition, there is no need for any base or other chemicals to be present in the reaction environment while said hydroboration reaction occurs. Isobutylboronic acid pinacol ester, which is an organoboron compound is obtained as a result of the method of iridium-catalyzed hydroboration of isobutylene with HBpin.

The method of iridium-catalyzed hydroboration of isobutylene with pinacolborane (HBpin) comprises the process steps of;
I. attaching a flask containing 99.9999% pure Ar to a two-necked glass flask dried at 100-150°C and cooled at a room temperature under Ar gas, and cooling said glass flask first to room temperature and then to -60 °C,
II. transferring isobutylene in liquid form into the cooled flask mentioned in the previous process step, from a tank having a bottom pipe system, by means of a silicone hose,
III. cooling a two-necked flask with an argon balloon attached thereto that contains tetrahydrofuran dried with Na-ketyl (THF) to -20 °C, and transferring an amount of isobutylene at a 1-5 M concentration by means of a cooled syringe,
IV. storing the obtained isobutylene solutions at -20 °C for use in the next process steps,
V. adding 0.1-1 mmol of HBpin, 0.1-1 mL of Iridium N-heterocyclic carbene (NHC) complex [IrCl(COD)(NHC)] that is pre-prepared in dry THF, 0.5-2 mL of THF dried with Na-ketyl, and a magnet, respectively, to a thick-walled glass tube with a screw cap in a glove box containing nitrogen gas,
VI. mixing said glass tube for 1-10 minutes at a room temperature after its cap is closed,
VII. taking said glass tube out of the glove box and cooling it down to -20 °C,
VIII. taking 1-5 mL of isobutylene cooled to -20 °C and adding it to said glass tube by a syringe, and thus 1-10 mmol of isobutylene is present in said glass tube,
IX. removing the septum attached to the glass tube with a screw-cap, attaching the cap of the glass tube, mixing for 10-20 hours by placing it in an oil bath heated to 80-120°C and positioned on a magnetic stirrer,
X. cooling the glass tube with a screw cap after the reaction time is completed, and removing the isobutylene gas in said glass tube in a fume cupboard,
XI. adding dodecane used as internal standard to the tube by using a small amount of solvent, and completing the synthesis of isobutylboronic acid pinacol ester, which is an organoboron compound.

The optimum temperature of the iridium-catalyzed hydroboration method of isobutylene with HBpin is 100°C. HBpin, which is used as a hydroboration agent in the process steps, decomposes when exposed to air and moisture for a long time since it is sensitive to air and moisture. In addition, the method is performed in a closed system with an inert gas environment since the reaction temperature (80-120°C) is higher than the boiling points of solvent and reactive isobutylene.

The synthesis reaction of isobutylboronic acid pinacol ester, which is an organoboron compound, and which is obtained by means of the method of iridium-catalyzed hydroboration of isobutylene with HBpin that is the subject of the present invention, is shown in Reaction 1;

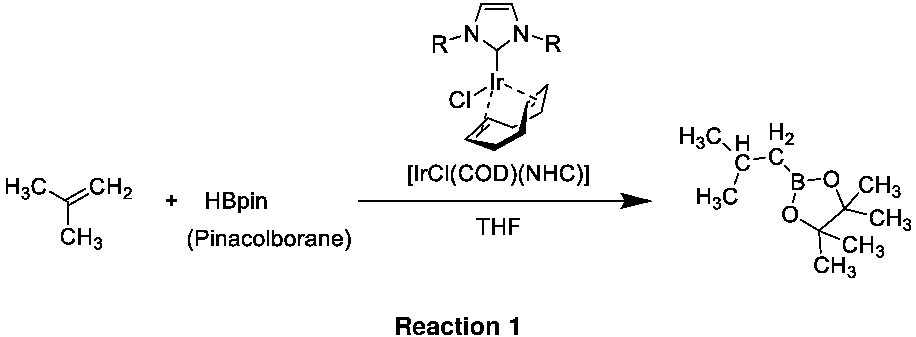

The synthesis reaction of isobutylboronic acid pinacol ester(I), which is an organoboron compound, and which is obtained by means of the method of iridium-catalyzed (0.05 mole%) hydroboration of isobutylene with HBpin that is the subject of the present invention, and all side-products (II) formed as a result of said synthesis reaction; isobutylene boronic acid pinacol ester, (III); 1.2-diboronic acid-2-methyl propane pinacol ester, and 1.3-diboronic acid-2-methyl propane pinacol ester) are shown in Reaction 2;

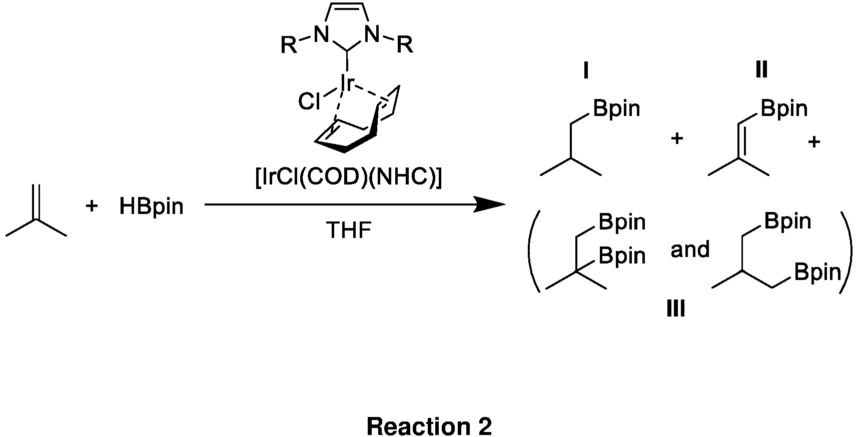

**Table 1. The synthesis reaction of isobutylboronic acid pinacol ester, which is an organoboron compound, and which is obtained by means of the method of iridium-catalyzed (0.05 mole%) hydroboration of isobutylene with HBpin that is the subject of the present invention, and the results of all side-product yields resulting from said synthesis reaction.**

| | | | Yield(%) | | |
|---|---|---|---|---|---|
| Entr y | Catalyst (0.05 mole%) | Temperature (°C) | I | II | III |
| 1 | [Ir(COD)(OMe)]₂ | 70 | 54 | 2 | 7 |
| 2 | [Ir(COD)(OMe)]₂ | 100 | 47 | 6 | 10 |
| 3 | Ir(COD)(NHC1)Cl | 80 | 56 | 2 | 3 |
| 4 | Ir(COD)(NHC1)Cl | 90 | 51 | 2 | 2 |
| 5 | Ir(COD)(NHC1)Cl | 100 | 62 | 4 | 3 |
| 6^{a} | Ir(COD)(NHC1)Cl | 100 | 6 | 0 | 0 |
| 7 | Ir(COD)(NHC1)Cl | 120 | 60 | 3 | 2 |
| 8 | Ir(COD)(NHC2)Cl | 100 | 42 | 2 | 0 |
| 9 | Ir(COD)(NHC3)Cl | 100 | 84 | 4 | 2 |

| | | | | | |
|---|---|---|---|---|---|
| ^{a} Indicates the hydroboration reaction, in which 5% mole of KOH base is used. | | | | | |

Reasonable borylated product yields can be achieved when iridium complexes [Ir(COD)(OMe)]₂ are used in hydroboration reactions. This effect is clear when considering the entries 1 and 2.

A slight increase in product yields was achieved with Ir(COD)(NHC1)Cl catalyst, which is an electron-rich but sterically bulky complex. This effect is clear when considering the entries 3, 4, 5, and 7. However, the presence of KOH base in the environment greatly reduced the catalytic activity of the same iridium catalyst complex [Ir(COD)(NHC1)Cl] (entry 8).

Increasing the ligand steric bulkiness (complex Ir(COD)(NHC2)Cl) negatively affected the catalytic activity. This effect is clear when considering the entry 8.

However, the most effective result was obtained with the complex Ir(COD)(NHC3)Cl, which has a ligand that is electronically less dense, and in general, 100°C is evaluated as the optimum reaction temperature of the method. This effect is clear when considering the entry 9.

The [IrCl(COD)(NHC)] catalyst, which is extremely stable is used at a concentration of 0.01 mole% - 0.10 mole% compared to the molar amount of HBPin in the method of iridium-catalyzed hydroboration of isobutylene with HBpin, which is the subject of the present invention. Despite the very low concentration of [IrCl(COD)(NHC)] catalyst used, performing an industrial synthesis minimizes the costs of Ir-based catalysts by means of said method. In said method, there is no base that poses a threat to the environment and living health. Furthermore, a hydroboration method that does not pose a threat to the environment, and also human and animal health is provided by means of using NHC ligand as ligand, and using tetrahydrofuran (THF) as the solvent in said method of iridium-catalyzed hydroboration of isobutylene with HBpin. In addition, there is no boron waste that causes efficiency problems by means of the use of HBpin, in the method of iridium-catalyzed hydroboration of isobutylene with HBpin, which is the subject of the present invention. Thus, the maximum yield that can be obtained from a reagent is achieved by means of the aforementioned method. In the present invention, in the method of iridium-catalyzed hydroboration of isobutylene with pinacolborane used in the synthesis of isobutylboronic acid pinacol ester, which is an organoboron compound, the stability of iridium NHC catalyst, which is the active catalyst is increased, and said catalyst is prevented from being deactivated by decomposing to metal black by means of using NHC ligand. In other words, the life cycle of said catalyst is increased.

### REFERENCES

1. Zhou, Xin-Feng & Wu, Ya-Dong & Dai, Jian-Jun & Li, Yong-Jia & Huang, Yu & Xu, Hua-Jian. (2015). Chemlnform Abstract: Borylation of Primary and Secondary Alkyl Bromides Catalyzed by Cu2O Nanoparticles. RSC Adv. 5. 10.1039/C5RA06631J.
2. Wang, Xiao-Xu & Li, Lei & Gong, Tian-Jun & Xiao, Bin & Lu, Xi & Fu, Yao. (2019). Vicinal Diboration of Alkyl Bromides via Tandem Catalysis. Organic Letters. 21. 10.1021/acs.orglett.9b01481.

## Claims

1. A method of iridium-catalyzed hydroboration of isobutylene with pinacolborane (HBpin), **characterized in that**, it comprises the process steps of;
I. attaching a flask containing 99.9999% pure Ar to a two-necked glass flask dried at 100-150°C and cooled at a room temperature under Ar gas, and cooling said glass flask first to room temperature and then to -60 °C,
II. transferring isobutylene in liquid form into the cooled flask mentioned in the previous process step, from a tank having a bottom pipe system, by means of a silicone hose,
III. cooling a two-necked flask with an argon balloon attached thereto that contains tetrahydrofuran dried with Na-ketyl (THF) to -20 °C, and transferring an amount of isobutylene at a 1-5 M concentration by means of a cooled syringe,
IV. storing the obtained isobutylene solutions at -20 °C for use in the next process steps,
V. adding 0.1-1 mmol of HBpin, 0.1-1 mL of Iridium N-heterocyclic carbene (NHC) complex [IrCl(COD)(NHC)] that is pre-prepared in dry THF, 0.5-2 mL of THF dried with Na-ketyl, and a magnet, respectively, to a thick-walled glass tube with a screw cap in a glove box containing nitrogen gas,
VI. mixing said glass tube for 1-10 minutes at a room temperature after its cap is closed,
VII. taking said glass tube out of the glove box and cooling it down to -20 °C,
VIII. taking 1-5 mL of isobutylene cooled to -20 °C and adding it to said glass tube by a syringe, and thus 1-10 mmol of isobutylene is present in said glass tube,
IX. removing the septum attached to the glass tube with a screw-cap, attaching the cap of the glass tube, mixing for 10-20 hours by placing it in an oil bath heated to 80-120°C and positioned on a magnetic stirrer,
X. cooling the glass tube with a screw cap after the reaction time is completed, and removing the isobutylene gas in said glass tube in a fume cupboard,
XI. adding dodecane used as internal standard to the tube by using a small amount of solvent, and completing the synthesis of isobutylboronic acid pinacol ester, which is an organoboron compound.

2. A method according to Claim 1, **characterized in that**, the septum attached to the glass tube with a screw-cap is removed, the cap of the glass tube is attached, and it is mixed for 10-20 hours by placing it in an oil bath heated to 100°C and positioned on a magnetic stirrer.

## Patentansprüche

1. Verfahren zur Iridium-katalysierten Hydroborierung von Isobutylen mit Pinacolboran (HBpin), **dadurch gekennzeichnet, dass** es die folgenden Verfahrensschritte umfasst;
I. Aufsetzen eines 99,9999 % reines Ar enthaltenden Kolbens auf einen bei 100-150 °C getrockneten und bei Raumtemperatur unter Ar-Gas gekühlten Zweihals-Glaskolben und Abkühlen des Glaskolbens zunächst auf Raumtemperatur und dann auf -60 °C,
II. Überführen von Isobutylen in flüssiger Form in den im vorherigen Verfahrensschritt erwähnten gekühlten Kolben aus einem Tank mit einem Bodenrohrsystem mittels eines Silikonschlauchs,
III. Abkühlung eines Zweihalskolbens mit einem daran befestigten Argonballon, der mit Na-Ketyl (THF) getrocknetes Tetrahydrofuran enthält, auf -20 °C und Überführung einer Menge Isobutylen in einer Konzentration von 1 - 5 M mit Hilfe einer gekühlten Spritze,
IV. Lagerung der erhaltenen Isobutylenlösungen bei -20 °C zur Verwendung in den nächsten Verfahrensschritten,
V. Zugabe von 0,1-1 mmol HBpin, 0,1-1 mL Iridium-N-heterocyclisches Carben (NHC)-Komplex [IrCl(COD)(NHC)], der in trockenem THF hergestellt wurde, 0,5-2 mL THF, das mit Na-Ketyl getrocknet wurde, bzw. eines Magneten in ein dickwandiges Glasröhrchen mit Schraubverschluss in einem Handschuhfach mit Stickstoffgas,
VI. Mischen des Glasröhrchens während 1-10 Minuten bei Raumtemperatur, nachdem der Deckel geschlossen wurde,
VII. das Glasröhrchen aus dem Handschuhfach nehmen und es auf -20 °C abkühlen,
VIII. Entnahme von 1 -5 mL Isobutylen, das auf -20 °C abgekühlt ist, und Zugabe in das Glasröhrchen mittels einer Spritze, so dass sich 1-10 mmol Isobutylen in dem Glasröhrchen befinden,
IX. Entfernen des Septums, das mit einem Schraubverschluss am Glasröhrchen befestigt ist, Aufsetzen des Deckels des Glasröhrchens, 10-20 Stunden langes Mischen in einem auf 80-120°C erhitzten Ölbad und auf einem Magnetrührer,
X. Kühlen des Glasrohrs mit einem Schraubverschluss nach Ablauf der Reaktionszeit und Entfernen des Isobutylengases in dem Glasrohr in einem Abzug,
XI. Zugabe von Dodekan, das als interner Standard verwendet wird, in das Röhrchen unter Verwendung einer kleinen Menge Lösungsmittel und Abschluss der Synthese von Isobutylboronsäurepinacolester, einer Organoborverbindung.

2. Verfahren nach Anspruch 1, **dadurch gekennzeichnet, dass** das Septum, das an dem Glasröhrchen mit Schraubverschluss angebracht ist, entfernt wird, der Deckel des Glasröhrchens angebracht wird und es 10-20 Stunden lang gemischt wird, indem es in ein auf 100°C erhitztes Ölbad gelegt und auf einen Magnetrührer gestellt wird.

## Revendications

1. Méthode d'hydroboration d'isobutylène catalysée avec du pinacolborane (HBpin) par l'iridium, **caractérisé en ce qu'**il comprend les étapes de procédé suivantes ;
I. fixation d'un flacon contenant 99,9999 % d'Ar pur à un flacon en verre à deux cols séché à 100-150 °C et refroidi à température ambiante sous gaz Ar, et refroidissement dudit flacon en verre d'abord à température ambiante puis à -60 °C,
II. transfert de l'isobutylène sous forme liquide dans le ballon refroidi mentionné à l'étape précédente du procédé, à partir d'un réservoir doté d'un système de tuyauterie de fond, au moyen d'un tuyau en silicone,
III. refroidissement à -20 °C d'un ballon à deux cols auquel est attaché un ballon d'argon contenant du tétrahydrofurane séché au Na-cétyle (THF) et le transfert d'une quantité d'isobutylène à une concentration de 1 -5 M à l'aide d'une seringue refroidie,
IV. stockage des solutions d'isobutylène obtenues à -20 °C pour les utiliser dans les étapes suivantes du procédé,
V. ajout de 0,1 à 1 mmol de HBpin, 0,1 à 1 mL de complexe N-carbène hétérocyclique d'iridium (NHC) [IrCl(COD)(NHC)] préparé dans du THF sec, 0,5 à 2 mL de THF séché avec du Na-cétyle et un aimant, respectivement, à un tube en verre à paroi épaisse avec un bouchon à vis dans une boîte à gants contenant de l'azote gazeux,
VI. mélange dudit tube en verre pendant 1 à 10 minutes à température ambiante après avoir fermé son bouchon,
VII. sortir ledit tube de verre de la boîte à gants et le refroidir à -20 °C,
VIII. prélèvement de 1 à 5 mL d'isobutylène refroidi à -20 °C et l'ajout audit tube en verre à l'aide d'une seringue, et ainsi 1 à 10 mmol d'isobutylène sont présents dans ledit tube en verre,
IX. retrait du septum fixé au tube en verre par un bouchon à vis, fixation du bouchon du tube en verre, mélange pendant 10 à 20 heures en le plaçant dans un bain d'huile chauffé à 80-120°C et positionné sur un agitateur magnétique,
X. refroidissement du tube en verre avec un bouchon à vis une fois le temps de réaction terminé et élimination du gaz isobutylène dans ledit tube en verre dans une hotte aspirante,
XI. ajout de dodécane utilisé comme étalon interne dans le tube en utilisant une petite quantité de solvant, et achèvement de la synthèse de l'ester de pinacol de l'acide isobutylboronique, qui est un composé organoboron.

2. Méthode selon la revendication 1, **caractérisé en ce que** le septum fixé au tube de verre avec un bouchon à vis est retiré, le bouchon du tube de verre est fixé, et il est mélangé pendant 10 à 20 heures en le plaçant dans un bain d'huile chauffé à 100°C et positionné sur un agitateur magnétique.
